# EUROPEAN PATENT SPECIFICATION

(11) **EP 4 458 625 B1**
(45) Date of publication and mention of the grant of the patent: **09.07.2025**
(21) Application number: 23171741.4
(22) Date of filing: 04.05.2023
(51) Int. Cl.: B60S 1/50, B60K 15/03

(54) **FLUID SUPPLY SYSTEM**
FLUIDZUFUHRSYSTEM
SYSTÈME D'ALIMENTATION EN FLUIDE

(43) Date of publication of application: 06.11.2024
(73) Proprietor: Volvo Car Corporation, 405 31 Göteborg (SE)
(72) Inventor: ÅHLUND, Kristoffer, 40531 Göteborg (SE); JONSSON, Jakob, 40531 Göteborg (SE); VICTOR, Carl Johan, 40531 Göteborg (SE); FAST, Björn, 40531 Göteborg (SE); SOPI, Jeton, 40531 Göteborg (SE)
(74) Representative: Maiwald GmbH

(56) References cited:
- EP-A2- 2 771 200
- EP-B1- 2 771 200
- EP-B1- 3 769 993
- WO-A1-2021/170274
- DE-A1- 102020 200 088

## Description

The present disclosure relates to a fluid supply system.

The present disclosure is also relates to a vehicle comprising such fluid supply system.

Furthermore, the present disclosure relates to a manufacturing method for a fluid supply system.

Autonomous vehicles comprise numerous sensors. Many of these sensors require cleaning with washer fluid to remove dirt and to keep the sensors available for supporting autonomous driving functions. This increased need for sensor cleaning requires an increase in washer reservoir volume in the vehicle, if the user shall be able to refill with similar interval as in today's vehicles. To increase the volume of the washer fluid in the vehicle, an extra washer reservoir may be additionally provided. However, as a user will not appreciate to fill two different reservoirs at two different filling points, the washer reservoirs may be connected to each other with a hose or pipe.

EP 3 769 993 B1 describes a work vehicle including: a drive device that has an internal combustion engine for driving a vehicle body; a first tank for storing fuel to be supplied to the internal combustion engine; and a second tank for storing fuel to be supplied to the internal combustion engine; wherein the first tank is disposed in front of or behind the drive device, and the second tank is disposed below the drive device so as to be separated from the first tank by a predetermined distance.

DE 10 2020 200088 A1 relates to a method for controlling a refueling process on a motor vehicle, wherein the motor vehicle has a fuel tank system with a fuel tank, a filler pipe, a vent valve and a pressure sensor for detecting the Internal tank pressure. The method includes the steps: filling the fuel tank via the filler pipe with the vent valve open; closing the vent valve as soon as a maximum fill level in the fuel tank is reached; detecting the pressure inside the tank using the pressure sensor and pressure-controlled opening and closing of the vent valve to enable refueling.

Hence, there may be a need to provide an improved fluid supply system, which facilitates filling reservoirs connected to each other.

The problem is at least partially solved or alleviated by the subject matter of the independent claims of the present disclosure, wherein further examples are incorporated in the dependent claims.

It should be noted that the aspects of the disclosure described in the following apply to the fluid supply system, the vehicle comprising such a fluid supply system and a manufacturing method of such fluid supply system.

According to a first aspect, there is provided a fluid supply system. The fluid supply system comprises a first container, a second container and a fluid transfer passage. The first container and the second container are adapted to retain fluid. The first container and the second container are connected to each other through the fluid transfer passage. The first container comprises a fluid inlet to receive the fluid. The first container comprises an air evacuation element configured to limit a rate of air released from the first container, when the fluid is added into the first container in order to increase inner pressure in the first container, thus transfer the fluid at a faster pace into the second container through the fluid transfer passage.

The fluid supply system according to the present disclosure facilitates filling of dual fluid containers. In particular, the fluid inserted into the first container can be transferred to the second container swiftly. When filling a conventional dual container system, there may be stagnant fluid inside the first container such that the user may believe that the containers are fully filled. In other words, the fluid may appear prematurely full due to suboptimal fluid transfer. However, utilizing overpressure inside the first container, the fluid filled in the first container may be quickly transferred into the second container to balance the fluid level between the containers. Accordingly, without any additional equipment, reliable filling of the dual container fluid supply system may be achieved.

The fluid may be any kind of liquid, which may be stored in a container. The fluid may be, for instance an aqueous liquid such as a washer fluid. The first container and the second container may be formed to store such fluid. The first container and the second container may comprise substantially the same shape, size, volume and/or material. Alternatively, the first container and the second container may comprise different shape, size, volume and/or material.

The first container and the second container are in fluid communication via the fluid transfer passage, which may be adapted to transfer the fluid from the first container to the second container and vice versa. In other words, the fluid transfer passage may be connected to the first container on one side and to the second container on the other side. The fluid transfer passage may be connected to each of the first container and second container tightly, such that any leakage of the fluid or pressure drop may be prevented. The fluid transfer passage may comprise a rigid material or a soft material. The fluid transfer passage may comprise a plastic material, a rubber material, an elastomer material and/or a metallic material.

The fluid supply system may comprise more than two containers, which are in fluid communication through additional fluid transfer passages connecting the containers.

The fluid inlet may be arranged at the first container, through which the user may provide the fluid. Additionally, the second container may also comprise a fluid inlet. The fluid inlet may be an opening integrated at one wall of the container or a tube attached to the container.

The air evacuation element may be integrated or attached at the wall of the first container. The air evacuation element may comprise an air release restriction element, which may be attached or integrally formed with the air evacuation element. For instance, the air release restriction element may be formed as a cap with a narrower opening than a diameter of an opening of the air evacuation element, through which air can be released. Alternatively, the air evacuation element may comprise an air outlet valve. When filling the first container with the fluid via the fluid inlet, volume of the fluid inside the first container increases and volume of the air present inside the first container decreases, which may cause air pressure in the first container to increase.

The air evacuation element may be adapted to limit or even prevent the air from escaping the first container. Accordingly, the air pressure inside the first container may increase further, which may lead to an overpressure in the first container. Such overpressure may cause the fluid to push in direction to the second container via the fluid transfer passage to balance the pressure between the first container and the second container. As a result, the fluid may be smoothly and swiftly transferred to the second container without stagnant fluid in the first container.

According to the disclosure, the air evacuation element of the first container comprises a smaller cross-sectional area than the air vent element of the second container. The air evacuation element may be configured to control the rate of air released from the first container whereas the air vent element may be configured to adjust a quick pressure balance between the inner pressure of the second container and the ambient pressure. Accordingly, the air evacuation element may comprise a smaller cross-sectional area, or diameter than the air vent element. However, the air evacuation element may also comprise the same or bigger cross-sectional area as the air vent element. In yet another example, the size of the air evacuation element and/or the size of the air vent element may be adjusted based on the volume of the respective container.

In an example, the second container is adapted to receive the fluid only through the fluid transfer passage. In other words, the second container may not comprise a fluid inlet or the fluid inlet arranged at the second container may not be used for filling the dual container system. Accordingly, the fluid is filled in the second container only through the fluid inlet of the first container and the fluid transfer passage. Accordingly, the fluid transfer by applying pressure difference between the first container and the second container may be facilitated.

In an example, the second container comprises an air vent element dimensioned to provide ambient pressure inside the second container. The air vent element may be configured to balance between the second container and the ambient pressure such as atmospheric pressure. The air vent element may function similar to the air evacuation element arranged at the first container. Thus, the air vent element may also comprise an air outlet valve, which may be adapted for a quick pressure compensation.

Since the overpressure is present in the first container, when filling the fluid via the fluid inlet arranged at the first container, and the atmospheric pressure is present in the second container, the fluid retained in the first container may be swiftly guided to the second container via the fluid transfer passage. Accordingly, the user may correctly estimate the amount of the fluid filled in the first and second containers.

In an example, the air evacuation element is arranged at a top portion of the first container. The term "top portion of the container" may be understood as an uppermost portion of the container. Since the fluid filled in the first container can be retained at a lower side than air present inside the container, the air evacuation element may be arranged at the air side. Thus, to efficiently limit the release rate of the air from the first container, the air evacuation element may be arranged at the top portion of the first container.

In an example, the air vent element is arranged at a top portion of the second container. Since the fluid filled in the second container can be retained at a lower side than air present inside the container, the air vent element may be arranged at the air side. To efficiently balance the inner pressure of the second container with the atmospheric pressure, the air vent element may be arranged at a top portion of the second container.

In an example, the air evacuation element is separated from the fluid inlet. In other words, a liquid path and an air path in the first container may be distinctly separated from each other to prevent the liquid path and the air path from blocking each other. Thus, the overpressure is reliably created in the first container, which may result in a swift transfer of the liquid to the second container.

In an example, the fluid transfer passage is connected to a bottom portion of the first container and the second container. The term "bottom portion of the container" may be understood as a lowermost portion of the container. When connecting the fluid transfer passage at each lowermost portion of the first container and the second container, the fluid may be influenced not only by the overpressure inside the first container but also the gravity force. Accordingly, the fluid transfer from the first container to the second container may be further facilitated.

In an example, the first container and/or the second container comprises a fluid outlet for providing fluid to a neighboring system. The first container and/or the second container may be adapted to temporally retain the fluid, which may be delivered to an application location, in other words the neighboring system or peripheral equipment. For instance, the fluid may be a washer fluid, which may be used for cleaning sensors of a vehicle. Hence, the fluid may be guided through the fluid outlet to the application location, in other words sensors.

In an example, the first container and the second container comprise the same interior volume. Alternatively, the first container and the second container may comprise different interior volumes. Further, the first container and the second container may be permanently connected or they may be separable.

According to a second aspect, there is provided a vehicle. The vehicle comprises a fluid supply system as described above. The fluid supply system may be configured to provide liquid for cleaning, cooling, lubricating, etc. Accordingly, the fluid supply system may be arranged inside the vehicle and further connected to a neighboring system, at which the fluid may be applied. However, the fluid supply system may be also arranged outside the vehicle.

In an example, a first container is arranged separated from the second container in the vehicle. Even though a dual container system, the containers may not need to be arranged at a same location in the vehicle. By mounting the first container and the second container separately from each other, installation space of the containers can be optimized, which saves space. For instance, the first container may be mounted at a left side of the vehicle whereas the second container may be mounted at a right side of the vehicle. Further, the first container may be mounted at a front side of the vehicle whereas the second container may be mounted at a rear side of the vehicle.

According to a third aspect, there is provided a manufacturing method for a fluid supply system. The method comprises, but not necessarily in this order,
- providing a first container comprising a fluid inlet and an air evacuation element,
- providing a second container, and
- connecting the first container and the second container through a fluid transfer passage.
The first container and the second container being adapted to retain fluid. The air evacuation element is configured to limit a rate at which air is released from the first container, when fluid is added into the first container in order to increase inner pressure in the first container and transfer the fluid into the second container through the fluid transfer passage.

It should be noted that the above examples may be combined with each other irrespective of the aspect involved. Accordingly, the method may be combined with structural features and, likewise, the system may be combined with features described above with regard to the method described above.

These and other examples of the present disclosure will become apparent from and elucidated with reference to the embodiments described hereinafter.

Examples of the present disclosure will be described in the following with reference to the following drawings.
- Fig. 1: shows schematically an example of a fluid supply system according to the present disclosure.
- Fig. 2: shows schematically an example of a fluid supply system according to the present disclosure.
- Fig. 3: shows schematically an example of a container according to the present disclosure.

The Figures are merely schematic representations and serves only to illustrate examples of the disclosure. Identical or equivalent elements are in principle provided with the same reference signs.

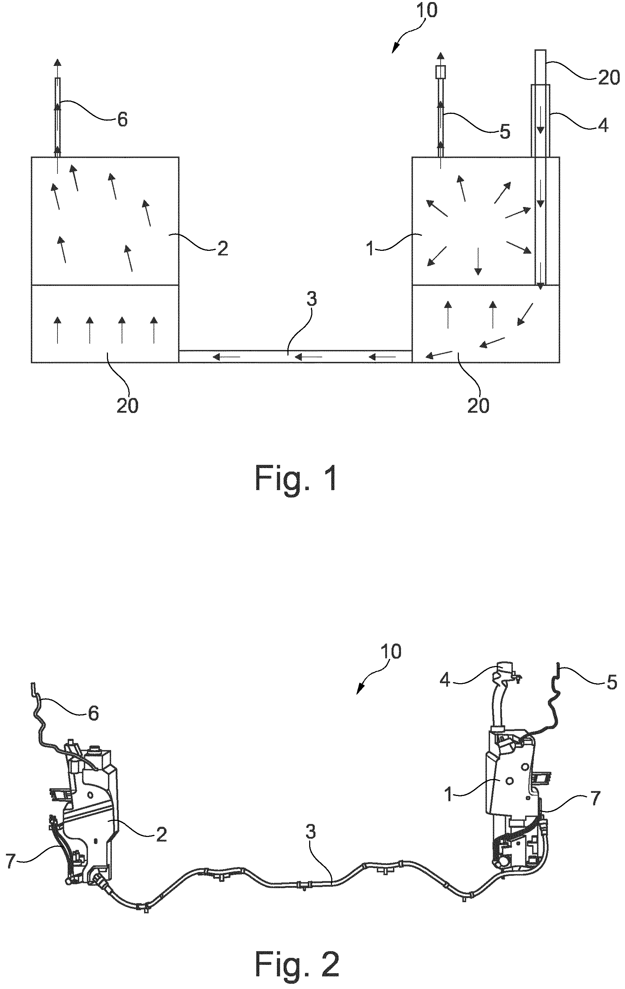

Fig. 1 and Fig. 2 show a fluid supply system, which may be arranged in a vehicle for supplying fluid 20. The fluid 20 may be utilized for cleaning, cooling, lubricating, etc. The fluid supply system 10 comprises a first container 1, a second container 2 and a fluid transfer passage 3. The first container 1 and the second container 2 are adapted to retain fluid 20. The first container 1 and the second container 2 comprise the same interior volume. Alternatively, the first container 1 and the second container 2 may comprise different interior volumes. Further, the first container 1 and the second container 2 may be permanently connected or they may be separable. The first container 1 can be arranged separated from the second container 2 inside the vehicle.

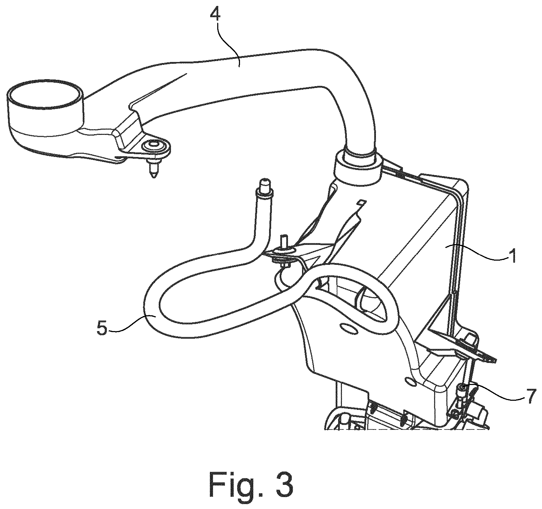

As shown in Fig. 3, the first container 1 comprises a fluid inlet 4 to receive the fluid 20. The first container 1 comprises an air evacuation element 5 configured to limit a release rate of air from the first container 1, when the fluid 20 is added into the first container 1. The second container 2 comprises an air vent element 6 dimensioned to provide atmospheric pressure inside the second container 2. The air evacuation element 5 and/or the air vent element 6 may comprise an air outlet valve.

The air evacuation element 5 is arranged at a top portion of the first container 1. The air vent element 6 is arranged at a top portion of the second container 2. The air evacuation element 5 is separated from the fluid inlet 4. The air evacuation element 5 of the first container 1 comprises a smaller cross-sectional area than the air vent element 6 of the second container 2.

The first container 1 and the second container 2 are connected to each other through the fluid transfer passage 3. The fluid transfer passage 3 is connected to a bottom portion of the first container 1 and the second container 2. The second container 2 can be adapted to receive the fluid 20 only through the fluid transfer passage 3. Further, the first container 1 and/or the second container 2 comprises a fluid outlet 7 for providing fluid 20 to a neighboring system.

Accordingly, when providing the fluid 20 into the first container 1 via the fluid inlet 4, overpressure can be created inside the first container 1, since air present in the first container 1 is limited to release due to the air evacuation element 5. Whereas, atmospheric pressure is present in the second container 2 due to the air vent element 6. Hence, the fluid 20 retained in the first container 1 can be swiftly guided to the second container 2 via the fluid transfer passage 3 to balance the fluid level between the first container 1 and the second container 2 without stagnant fluid 20 in the first container 1.

It has to be noted that examples of the disclosure are described with reference to different subject matters. In particular, some examples are described with reference to method type claims whereas other examples are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the disclosure has been illustrated and described in detail in the drawings and description, such illustration and description are to be considered illustrative or exemplary and not restrictive. The disclosure is not limited to the disclosed examples.

In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### Reference signs

- 10: fluid supply system
- 20: fluid
- 1: first container
- 2: second container
- 3: fluid transfer passage
- 4: fluid inlet
- 5: air evacuation element
- 6: air vent element
- 7: fluid outlet

## Claims

1. A fluid supply system (10), comprising
- a first container (1),
- a second container (2), and
- a fluid transfer passage (3),
the first container (1) and the second container (2) being adapted to retain fluid (20), the first container (1) and the second container (2) being connected to each other through the fluid transfer passage (3),
the first container (1) comprising a fluid inlet (4) to receive the fluid (20),
the first container (1) comprising an air evacuation element (5),
**characterized in that**
the air evacuation element (5) being configured to limit a rate at which air is released from the first container (1) when the fluid (20) is added into the first container (1) in order to increase inner pressure in the first container (1) and transfer the fluid (20) into the second container (2) through the fluid transfer passage (3), and
the air evacuation element (5) of the first container (1) comprising a smaller cross-sectional area than the air vent element (6) of the second container (2).

2. The fluid supply system (10) according to claim 1, the second container (2) comprising no fluid inlet (4).

3. The fluid supply system (10) according to claim 1 or 2, the second container (2) comprising an air vent element (6) dimensioned to provide ambient pressure inside the second container (2).

4. The fluid supply system (10) according to claim 1, the air evacuation element (5) being arranged at a top portion of the first container (1).

5. The fluid supply system (10) according to claim 3, the air vent element (6) being arranged at a top portion of the second container (2).

6. The fluid supply system (10) according to any of the preceding claims, the air evacuation element (5) being separated from the fluid inlet (4).

7. The fluid supply system (10) according to claim 1, the fluid transfer passage (3) being connected to a bottom portion of the first container (1) and a bottom portion the second container (2).

8. The fluid supply system (10) according to any of the preceding claims, the first container (1) and/or the second container (2) comprising a fluid outlet (7) for providing fluid (20) to a neighboring system.

9. A vehicle, comprising a fluid supply system (10) according to any of the preceding claims 1 to 8.

10. The vehicle according to the preceding claim 9, a first container (1) being arranged separated from the second container (2) in the vehicle.

11. A manufacturing method for a fluid supply system (10), comprising
- providing a first container (1) comprising a fluid inlet (4) and an air evacuation element (5),
- providing a second container (2), and
- connecting the first container (1) and the second container (2) through a fluid transfer passage (3),
the first container (1) and the second container (2) being adapted to retain fluid (20),
the air evacuation element (5) being configured to limit the rate at which air is released from the first container (1), when the fluid (20) is added into the first container (1) in order to increase inner pressure in the first container (1) and transfer the fluid (20) into the second container (2) through the fluid transfer passage (3), and
the air evacuation element (5) of the first container (1) comprising a smaller cross-sectional area than the air vent element (6) of the second container (2).

## Patentansprüche

1. Flüssigkeitszufuhrsystem (10), umfassend
- einen ersten Behälter (1),
- einen zweiten Behälter (2) und
- einen Flüssigkeitstransferkanal (3),
wobei der erste Behälter (1) und der zweite Behälter (2) zum Aufnehmen von Flüssigkeit (20) ausgebildet sind,
wobei der erste Behälter (1) und der zweite Behälter (2) über den Flüssigkeitstransferkanal (3) miteinander in Verbindung stehen,
wobei der erste Behälter (1) einen Flüssigkeitseinlass (4) zum Einfüllen der Flüssigkeit (20) aufweist,
wobei der erste Behälter (1) ein Luftevakuierungselement (5) aufweist,
**dadurch gekennzeichnet, dass**
das Luftevakuierungselement (5) so eingerichtet ist, dass es eine Begrenzung der Abgaberate von Luft aus dem ersten Behälter (1) bewirkt, wenn Flüssigkeit (20) in den ersten Behälter (1) eingefüllt wird, um so den Innendruck im ersten Behälter (1) zu erhöhen und die Flüssigkeit (20) über den Flüssigkeitstransferkanal (3) in den zweiten Behälter (2) zu fördern, und
das Luftevakuierungselement (5) des ersten Behälters (1) einen kleineren Querschnitt aufweist als das Luftaustrittselement (6) des zweiten Behälters (2).

2. Flüssigkeitszufuhrsystem (10) nach Anspruch 1, wobei der zweite Behälter (2) keinen Flüssigkeitseinlass (4) aufweist.

3. Flüssigkeitszufuhrsystem (10) nach Anspruch 1 oder 2, wobei der zweite Behälter (2) ein Luftaustrittselement (6) aufweist, das so dimensioniert ist, dass Umgebungsdruck im Inneren des zweiten Behälters (2) bereitgestellt wird.

4. Flüssigkeitszufuhrsystem (10) nach Anspruch 1, wobei das Luftevakuierungselement (5) in einem oberen Abschnitt des ersten Behälters (1) angeordnet ist.

5. Flüssigkeitszufuhrsystem (10) nach Anspruch 3, wobei das Luftaustrittselement (6) in einem oberen Abschnitt des zweiten Behälters (2) angeordnet ist.

6. Flüssigkeitszufuhrsystem (10) nach einem der vorhergehenden Ansprüche, wobei das Luftevakuierungselement (5) vom Flüssigkeitseinlass (4) getrennt angeordnet ist.

7. Flüssigkeitszufuhrsystem (10) nach Anspruch 1, wobei der Flüssigkeitstransferkanal (3) mit einem unteren Abschnitt des ersten Behälters (1) und einem unteren Abschnitt des zweiten Behälters (2) in Verbindung steht.

8. Flüssigkeitszufuhrsystem (10) nach einem der vorhergehenden Ansprüche, wobei der erste Behälter (1) und/oder der zweite Behälter (2) einen Flüssigkeitsauslass (7) zum Abgeben von Flüssigkeit (20) an ein benachbartes System aufweist/aufweisen.

9. Fahrzeug, umfassend ein Flüssigkeitszufuhrsystem (10) nach einem der Ansprüche 1 bis 8.

10. Fahrzeug nach Anspruch 9, wobei der erste Behälter (1) im Fahrzeug getrennt vom zweiten Behälter (2) angeordnet ist.

11. Herstellungsverfahren für ein Flüssigkeitszufuhrsystem (10), umfassend
- Bereitstellen eines ersten Behälters (1) mit einem Flüssigkeitseinlass (4) und einem Luftevakuierungselement (5),
- Bereitstellen eines zweiten Behälters (2), und
- Verbinden des ersten Behälters (1) mit dem zweiten Behälter (2) über einen Flüssigkeitstransferkanal (3),
wobei der erste Behälter (1) und der zweite Behälter (2) zum Aufnehmen von Flüssigkeit (20) ausgebildet sind,
wobei das Luftevakuierungselement (5) so eingerichtet ist, dass es die Abgaberate von Luft aus dem ersten Behälter (1) begrenzt, wenn Flüssigkeit (20) in den ersten Behälter (1) eingefüllt wird, um so den Innendruck im ersten Behälter (1) zu erhöhen und die Flüssigkeit (20) über den Flüssigkeitstransferkanal (3) in den zweiten Behälter (2) zu fördern,
und wobei das Luftevakuierungselement (5) des ersten Behälters (1) einen kleineren Querschnitt aufweist als das Luftaustrittselement (6) des zweiten Behälters (2).

## Revendications

1. Système d'alimentation en fluide (10) comprenant :
- un premier récipient (1),
- un second récipient (2), et
- un passage de transfert de fluide (3),
le premier récipient (1) et le second récipient (2) étant adaptés pour retenir du fluide (20),
le premier récipient (1) et le second récipient (2) étant reliés l'un à l'autre par le passage de transfert de fluide (3),
le premier récipient (1) comprenant une entrée de fluide (4) pour recevoir le fluide (20),
le premier récipient (1) comprenant un élément d'évacuation d'air (5),
**caractérisé en ce que**
l'élément d'évacuation d'air (5) est configuré pour limiter un débit auquel de l'air est libéré du premier récipient (1) lorsque le fluide (20) est ajouté dans le premier récipient (1) afin d'augmenter une pression interne dans le premier récipient (1) et transférer le fluide (20) dans le second récipient (2) par le passage de transfert de fluide (3), et
l'élément d'évacuation d'air (5) du premier récipient (1) présente une aire de section transversale plus petite que l'élément d'évent d'air (6) du second récipient (2).

2. Système d'alimentation en fluide (10) selon la revendication 1, le second récipient (2) ne comprenant aucune entrée de fluide (4).

3. Système d'alimentation en fluide (10) selon la revendication 1 ou 2, le second récipient (2) comprenant un élément d'évent d'air (6) dimensionné pour fournir une pression ambiante à l'intérieur du second récipient (2).

4. Système d'alimentation en fluide (10) selon la revendication 1, l'élément d'évacuation d'air (5) étant agencé sur une partie supérieure du premier récipient (1).

5. Système d'alimentation en fluide (10) selon la revendication 3, l'élément d'évacuation d'air (6) étant agencé sur une partie supérieure du second récipient (2).

6. Système d'alimentation en fluide (10) selon l'une quelconque des revendications précédentes, l'élément d'évacuation d'air (5) étant séparé de l'entrée de fluide (4).

7. Système d'alimentation en fluide (10) selon la revendication 1, le passage de transfert de fluide (3) étant relié à une partie inférieure du premier récipient (1) et à une partie inférieure du second récipient (2).

8. Système d'alimentation en fluide (10) selon l'une quelconque des revendications précédentes, le premier récipient (1) et/ou le second récipient (2) comprenant une sortie de fluide (7) pour fournir du fluide (20) à un système voisin.

9. Véhicule, comprenant un système d'alimentation en fluide (10) selon l'une quelconque des revendications 1 à 8 précédentes.

10. Véhicule selon la revendication 9 précédente, un premier récipient (1) étant agencé séparé du second récipient (2) dans le véhicule.

11. Procédé de fabrication d'un système d'alimentation en fluide (10), comprenant de :
- fournir un premier récipient (1) comprenant une entrée de fluide (4) et un élément d'évacuation d'air (5),
- fournir un second récipient (2), et
- relier le premier récipient (1) et le second récipient (2) par un passage de transfert de fluide (3),
le premier récipient (1) et le second récipient (2) étant adaptés pour retenir le fluide (20),
l'élément d'évacuation d'air (5) étant configuré pour limiter le débit auquel de l'air est libéré du premier récipient (1), lorsque le fluide (20) est ajouté dans le premier récipient (1) afin d'augmenter une pression interne dans le premier récipient (1) et transférer le fluide (20) dans le second récipient (2) par le passage de transfert de fluide (3), et
l'élément d'évacuation d'air (5) du premier récipient (1) présente une aire de section transversale plus petite qu'un élément d'évent d'air (6) du second récipient (2).
